# EUROPEAN PATENT SPECIFICATION

(11) **EP 1 659 730 B1**
(45) Date of publication and mention of the grant of the patent: **13.02.2008**
(21) Application number: 05110422.2
(22) Date of filing: 07.11.2005
(51) Int. Cl.: H04L 12/00

(54) **Daisy Chain Structure with behaviour of a bus topology**
"Daisy-Chain" Struktur mit Verhalten einer Bustopologie
Structure de "Daisy-Chain" avec comportement d'une topologie de bus

(30) Priority: 17.11.2004 KR 2004094324
(43) Date of publication of application: 24.05.2006
(73) Proprietor: SAMSUNG ELECTRONICS CO., LTD., Yeongtong-gu Suwon-city Gyeonggi-do 442-742 (KR)
(72) Inventor: Lee, Seong-Joon, Gyeonggi-do (KR)
(74) Representative: Walaski, Jan Filip

(56) References cited:
- US-A- 4 723 120
- US-A- 5 535 336
- US-B1- 6 320 838
- US-B1- 6 546 441

## Description

The present invention relates to a communication apparatus, and more particularly, to serial data communication apparatus which can simplify a communication system and make data communication possible regardless of the connecting order of communication connectors therein.

Usually, serial communication is used to allow an electric apparatus (hereinafter, referred to as "communication apparatus") to communicate with an external device. In conventional serial communication, for example when individual communication apparatuses communicate through individual cables with a personal computer (PC), the arrangement has a basic communication structure of 1:1, so that the number of serial communication integrated circuits (IC) needed is the same as the number of communication apparatuses that are coupled to the PC.

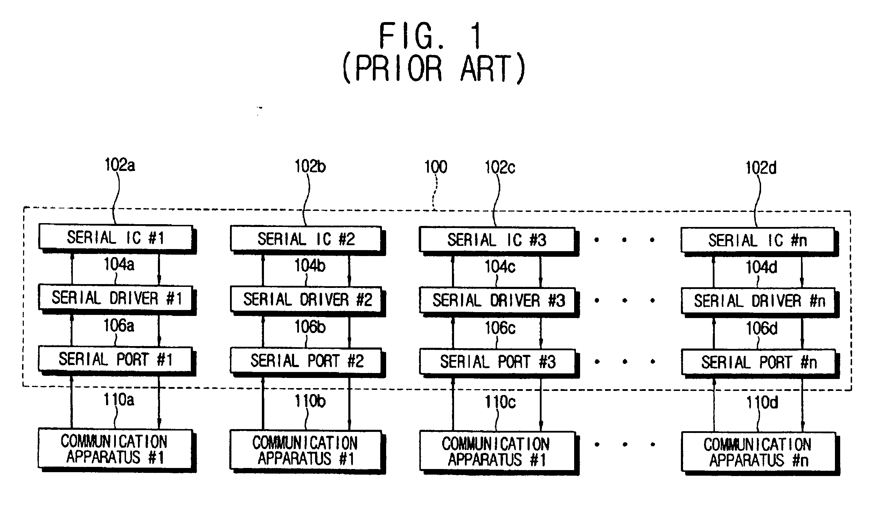

Figure 1 illustrates a connection between a plurality of conventional communication apparatuses and a PC controlling them. As shown in Figure 1, a PC 100 comprises N serial ICs 102a, 102b, 102c, 102d to control N communication apparatuses 110a, 110b, 110c, 110d; N serial drivers 104a, 104b, 104c, 104d to drive the respective N serial ICs 102a, 102b, 102c, 102d; and N serial ports 106a, 106b, 106c, 106d to receive/transmit serial communication data.

Further, each communication apparatus 110a, 110b, 110c, 110d comprises a serial driver (not shown), a serial IC (not shown) and one serial port (not shown) to be connected with the respective serial ports 106a, 106b, 106c, 106d provided in the PC 100.

The serial ports 106a, 106b, 106c, 106d of the PC 100 are connected by respective cables to individual ones of the serial ports of the communication apparatuses 110a, 110b, 110c, 110d, so that each serial IC 102a, 102b, 102c, 102d of the PC 100 can communicate with a respective one of the serial ICs of the communication apparatuses 110a, 110b, 110c, 110d, thereby allowing the PC 100 to control the respective communication apparatuses 110a, 110b, 110c, 110d.

The N serial ICs 102a, 102b, 102c, 102d cannot communicate at the same time with the respective serial ICs of the communication apparatuses 110a, 110b, 110c, 110d. For example, when communicating using one serial IC (e.g., 102a), it is impossible to use the other serial ICs 102b, 102c, 102d and the other serial ports 106b, 106c, 106d for communication with other communication apparatus 110b, 110c, 110d, until the communication performed by serial IC 102a has finished.

In such a communication system, when the PC 100 controls the plurality of communication apparatuses 110a, 110b, 110c, 110d, communication time increases because of time taken to switch between the ports 106, 106b, 106c, 106d. Also, the communication system becomes complicated and it is difficult to control communication apparatus 110a, 110b, 110c, 110d over long distances because the PC 100 and each communication apparatus 110a, 110b, 110c, 110d need to be connected by individual cables.

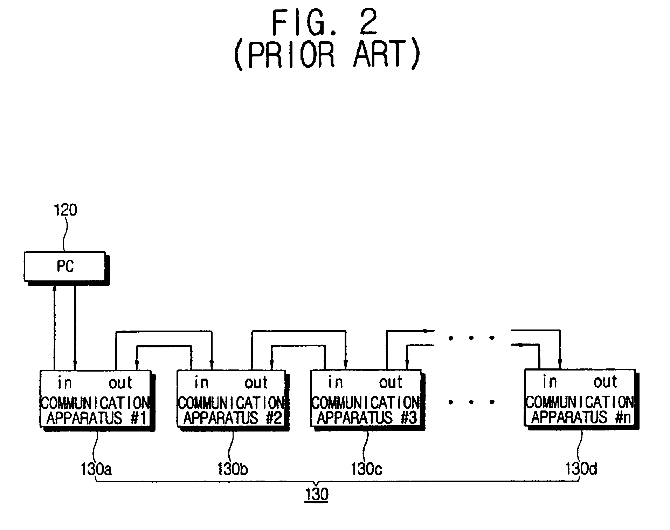

Accordingly, there has recently been proposed a communication system having configuration as shown in Figure 2. In this system, a plurality of communication apparatuses 130a, 130b, 130c, 130d are connected in series and one of them is connected to a PC 120, so that the plurality of communication apparatuses 130a, 130b, 130c, 130d are controlled individually by the PC 120. An example of this kind of serial connection is described in US-A-5 535 336.

In this case, the PC 120 is connected with only one communication apparatus 130a, so that the PC 120 needs only one serial IC, only one serial driver and only one serial connector instead of N serial ICs 102a, 102b, 102c, 102d; N serial drivers 104a, 104b, 104c, 104d; and N serial ports 106a, 106b, 106c, 106d shown in Figure 1.

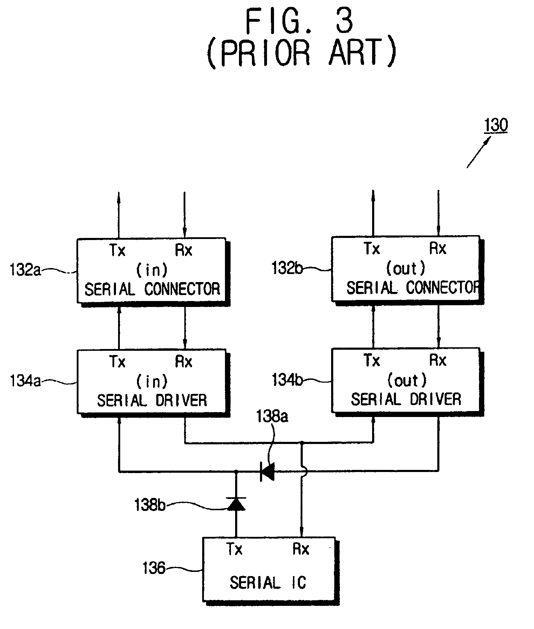

Further, as shown in Figure 3, each communication apparatus 130a, 130b, 130c, 130d comprises a pair of serial connectors 132a and 132b, each comprising a transmitting terminal Tx and a receiving terminal Rx; a pair of serial drivers 134a and 134b, each comprising the transmitting terminal Tx and the receiving terminal Rx; a serial IC 136 comprising the transmitting terminal Tx and the receiving terminal Rx; and diodes 138a and 138b to alter a data path. Here, the serial connectors 132a and 132b are divided into an input part and an output part, respectively. Further, the serial drivers 134a and 134b are divided into an input part and an output part, respectively. Thus, the serial connectors 132a and 132b and the serial drivers 134a and 134b are correspondingly connected to each other according to the input or output part.

With this configuration, transmitting data transmitted through the transmitting terminal Tx of the serial IC 136 is not transmitted to the output serial connector 132b because of the diodes 138a and 138b, but transmitted through the transmitting terminal Tx of the input serial connector 132a. Further, receiving data received through the input serial connector 132a is transmitted to the serial IC 136 and at the same time outputted through the transmitting terminal Tx of the output serial connector 132b. Also, the receiving data received through the output serial connector 132b is not transmitted to the serial IC 136 because of the diodes 138a and 138b, but outputted through the transmitting terminal Tx of the input serial connector 132a.

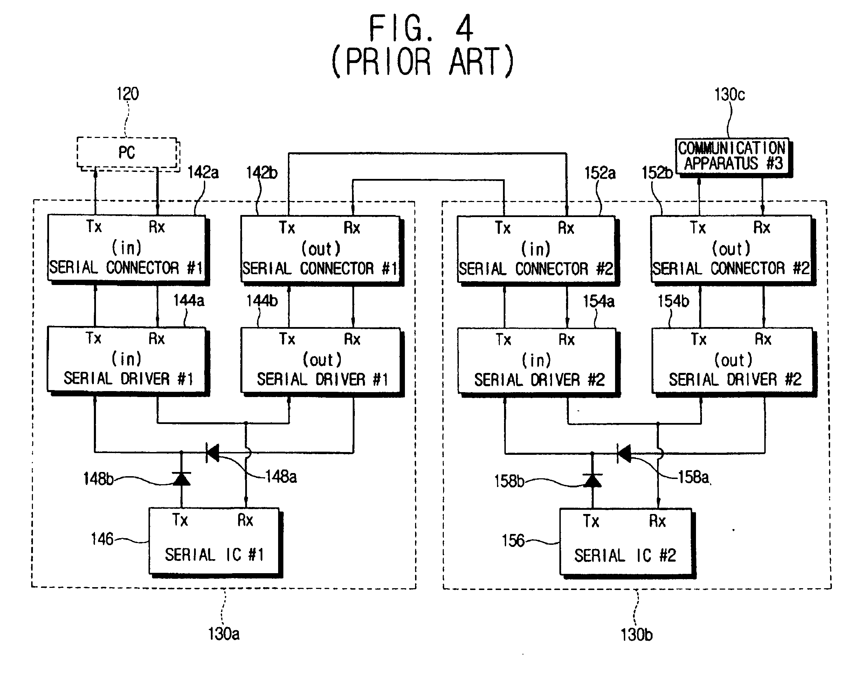

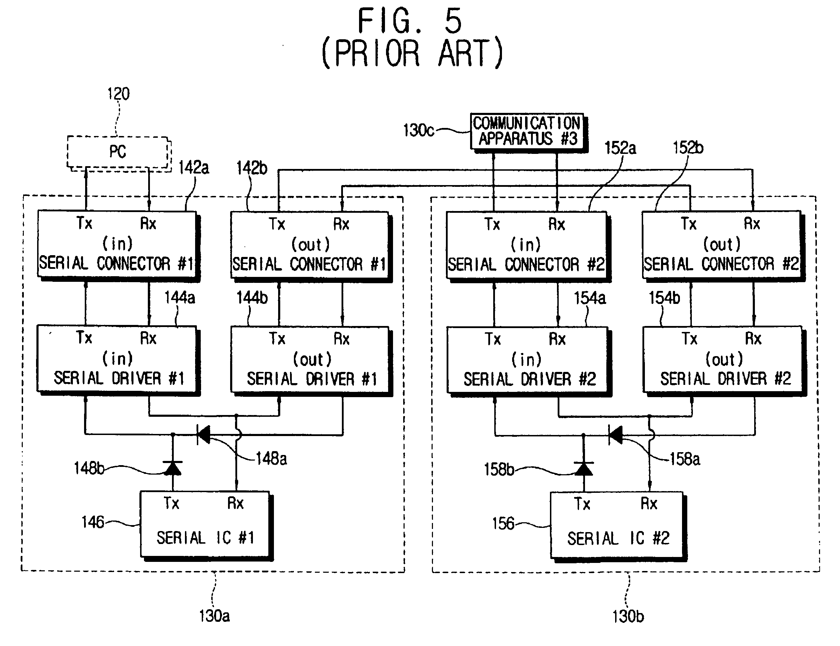

Figures 4 and 5 are block diagrams illustrating connection for data communication when the connecting order of the conventional serial connectors of Figure 2 is altered, in situations where the connecting cables that are plugged into the serial connectors 152a, 152b are transposed.

In the communication system as shown in Figure 4, a first communication apparatus 130a comprises an input serial connector 142a connected with the PC 120, and an output serial connector 142b connected by a cable to an input serial connector 152a of a second communication apparatus 130b. Further, an output serial connector 152b of the second communication apparatus 130b is connected with an input serial connector (not shown) of a third communication apparatus 130c. Likewise, the plurality of communication apparatuses 130a, 130b, 130c are sequentially connected in series from the PC 120.

When the first communication apparatus 130a receives control data from the PC 120 through a receiving terminal Rx of the input serial connector 142a, the control data is transmitted to the receiving terminal Rx of an input serial driver 144a. Then, the input serial driver 144a converts the received control data to be recognizable for the serial IC 146, and transmits it to the serial IC 146 and at the same time outputs it to the transmitting terminal Tx of an output serial driver 144b. Then, the output serial driver 144b converts the data to be transmittable to the outside, and transmits it through the transmitting terminal Tx of an output serial connector 142b.

Then, the receiving terminal Rx of the input serial connector 152a provided in the second communication apparatus 130b receives the data from the transmitting terminal Tx of the output serial connector 142b provided in the first communication apparatus 130a, and then the data is transmitted toward the serial IC 156 and the third communication apparatus 130c, similar to the data flow of the first communication apparatus 130a. Likewise, each communication apparatus 130a, 130b, 130c receives the control data from the PC 120 and transmits it to the next communication apparatus 130a, 130b, 130c, thereby allowing the plurality of communication apparatuses connected to each other to receive the control data from the PC 120.

Further, the transmitting data transmitted from the serial IC 146 of the first communication apparatus 130a is transmitted to the PC 120 through the transmitting terminal Tx of the input serial connector 142a. Also, the transmitting data transmitted from the serial IC 156 of the second communication apparatus 130b is transmitted to the PC 120 via the transmitting terminal Tx of the input serial connector 152a provided in the second communication apparatus 130b, and via the output serial connector 142b, the output serial driver 144b, the input serial driver 144a, and the input serial connector 142a of the first communication apparatus 130a. Thus, the data can be transmitted from each communication apparatus 130a, 130b, 130c to the PC 120.

However, when the connecting order of the serial connector of Figure 4 is altered as shown in Figure 5, a problem arises. In Figure 5, the cable that connects the serial connector 142b of communication apparatus 130a is coupled to the serial connector 152b of communication apparatus 130b, rather than to the serial connector 152a as shown in Figure 4. Also, the third communication apparatus 130c is coupled to the serial connector 152a in Figure 5 rather than to the serial connector 152b as shown in Figure 4. This results in incomplete connectivity between the communication apparatuses, as will now be explained in detail.

When the plurality of communication apparatuses 130a, 130b, 130c are connected in series with the PC 120 as shown in Figure 5 and the first communication apparatus 130a receives the control data from the PC 120 through the receiving terminal Rx of the input serial connector 142a, the control data is transmitted to the receiving terminal Rx of the input serial driver 144a. Then, the input serial driver 144a converts the received control data to be recognizable for the serial IC 146, and transmits it to the serial IC 146. Further, the data is transmitted to the transmitting terminal Tx of the output serial driver 144b. Likewise, the output serial driver 144b converts the data to be transmittable to the outside, and transmits it through the transmitting terminal Tx of the output serial connector 142b.

Then, the receiving terminal Rx of the output serial connector 152b provided in the second communication apparatus 130b receives the data from the transmitting terminal Tx of the output serial connector 142b provided in the first communication apparatus 130a, and the received data is transmitted to the third communication apparatus 130c via the output serial driver 154b, the diode 158a, the input serial driver 154a, and the input serial connector 152a. However, the data is not transmitted to the serial IC 156.

Further, the transmitting data transmitted from the serial IC 146 of the first communication apparatus 130a is transmitted to the PC 120 through the transmitting terminal Tx of the input serial connector 142a. However, the transmitting data transmitted from the serial IC 156 of the second communication apparatus 130b is transmitted to the third communication apparatus 130c via the transmitting terminal Tx of the input serial connector 152a, but is not transmitted to the PC 120.

Additionally, when the PC 120 is connected to the output serial connector 142b of the first communication apparatus 130a, the serial IC 146 of the first communication apparatus 130 cannot receive the control data from the PC 120, and cannot transmit the transmitting data from the serial IC 146 of the first communication apparatus 130a to the PC 120.

Thus the communication apparatuses need to be interconnected in a predetermined connecting order to enable the serial connections to work properly.

The present invention provides a communication apparatus which can simplify a communication system and make data communication possible regardless of the serial connecting order of the communication connectors.

The invention is defined in its broadest aspect in claim 1 hereinafter and further features and advantages thereof will become evident from the dependent claims.

Features and advantages of the present invention will become apparent and more readily appreciated from the following description of exemplary embodiments, taken in conjunction with the accompanying drawings of which:
Figures 1 and 2 are block diagrams illustrating connections between a plurality of conventional communication apparatuses and a personal computer;
Figure 3 is a block diagram illustrating internal configuration of each conventional communication apparatus;
Figures 4 and 5 are block diagrams illustrating connection for data communication when a connecting order of a conventional serial connector is altered;
Figure 6 is a block diagram illustrating connection between a plurality of communication apparatuses and a personal computer according to an exemplary embodiment of the present invention;
Figure 7 is a block diagram illustrating internal configuration of each communication apparatus according to an exemplary embodiment of the present invention; and
Figures 8 and 9 are block diagrams illustrating a connection for data communication when a connecting order of a serial connector is altered according to an exemplary embodiment of the present invention.

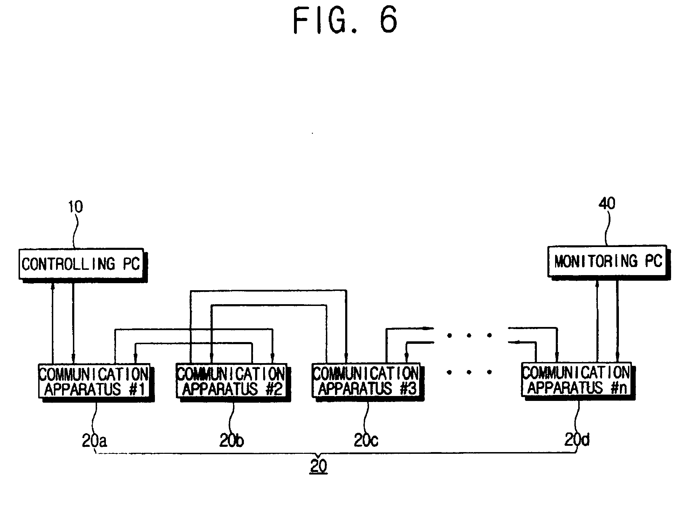

As shown in Figure 6, a plurality of communication apparatuses 20a, 20b, 20c, 20d are sequentially connected to each other in series from a controlling PC 10. Further, the communication apparatuses 20a, 20b, 20c, 20d are connected by a cable regardless of an input serial connector and an output serial connector. The nth communication apparatus 20d is connected to a monitoring PC 40.

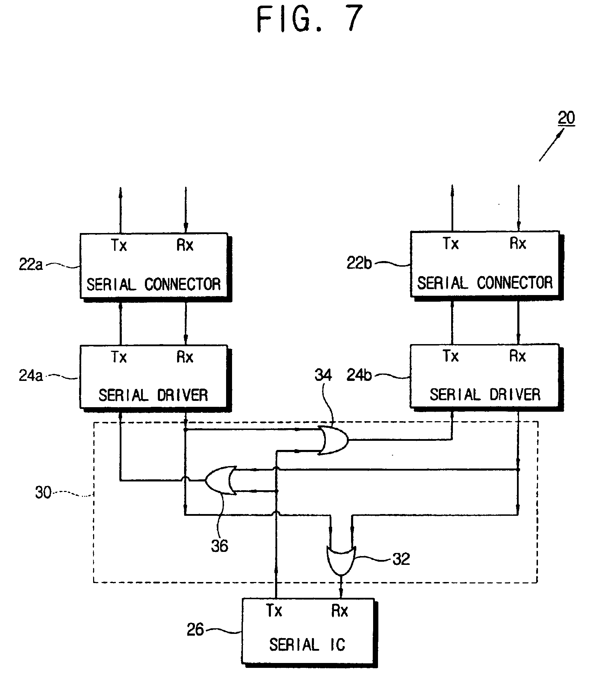

Figure 7 is a block diagram illustrating internal configuration of each communication apparatus shown in Figure 6, according to an exemplary embodiment of the present invention.

Referring to Figure 7, each communication apparatus comprises a pair of serial connectors 22a and 22b used as a communication connector; a pair of serial drivers 24a and 24b used as a communication driver; a serial IC 26 used as a communication controller; and a data path controller 30 for controlling a data path.

The serial drivers 24a and 24b each convert data received through the serial connectors 22a, 22b to be recognizable for the serial IC 26, or converts data generated by the serial IC 26 to be transmittable to the outside.

The serial IC 26 generates the data to be transmitted to the PCs 10, 40 or the communication apparatus 20 connected to the serial connector 22a, 22b, and receives the data from the PC 10, 40 or the communication apparatus 20, thereby performing a predetermined function.

Each of the serial connectors 22a, 22b, the serial drivers 24a, 24b, and the serial IC 26 has a transmitting terminal Tx to transmit the data, and a receiving terminal Rx to receive the data. In each communication apparatus 20, the transmitting terminals Tx are correspondingly connected to each other, and the receiving terminals Rx are correspondingly connected to each other as illustrated in Figure 7.

The data path controller 30 controls the data generated by the serial IC 26 to be transmitted to the communication apparatus 20 or the PC 10, 40 connected thereto through the pair of serial connectors 22a and 22b. Further, the data path controller 30 controls the data received through one of the serial connectors 22a and 22b to be transmitted to the serial IC 26, and at the same time controls the data to be transmitted to the PC 10, 40 or the communication apparatus 20 connected to the other of the serial connectors 22a and 22b.

The data path controller 30 comprises a first logic circuit (OR gate) 32 to OR-operate the data received through the serial connectors 22a, 22b and transmit it to the serial IC 26; a second logic circuit (OR gate) 34 to OR-operate the data generated by the serial IC 26 with the data received through a first serial connector 22a and transmit it to a second serial connector 22b; and a third logic circuit (OR gate) 36 to OR-operate the data generated by the serial IC 26 with the data received through the second serial connector 22b and transmit it to the first serial connector 22a.

The first OR gate 32 transmits the data to the serial IC 26 when the data is inputted through either the first serial connector 22a or the second serial connector 22b.

The second and third OR gates 34 and 36 transmit the data generated by the serial IC 26 to the outside through the respective serial connectors 22a and 22b. Further, each of the second and third OR gates 34 and 36 receives the data through one of the serial connectors 22a and 22b and transmits it through the other one of the serial connectors 22b or 22a.

If each communication apparatus 20 transmits the data to the controlling PC 10, the communication apparatus 20 shares one data line with another communication apparatus 20 through the second OR gate 34 and the third OR gate 36, so that a protocol should be defined to prevent the data of the respective communication apparatuses 20 from being transmitted at the same time.

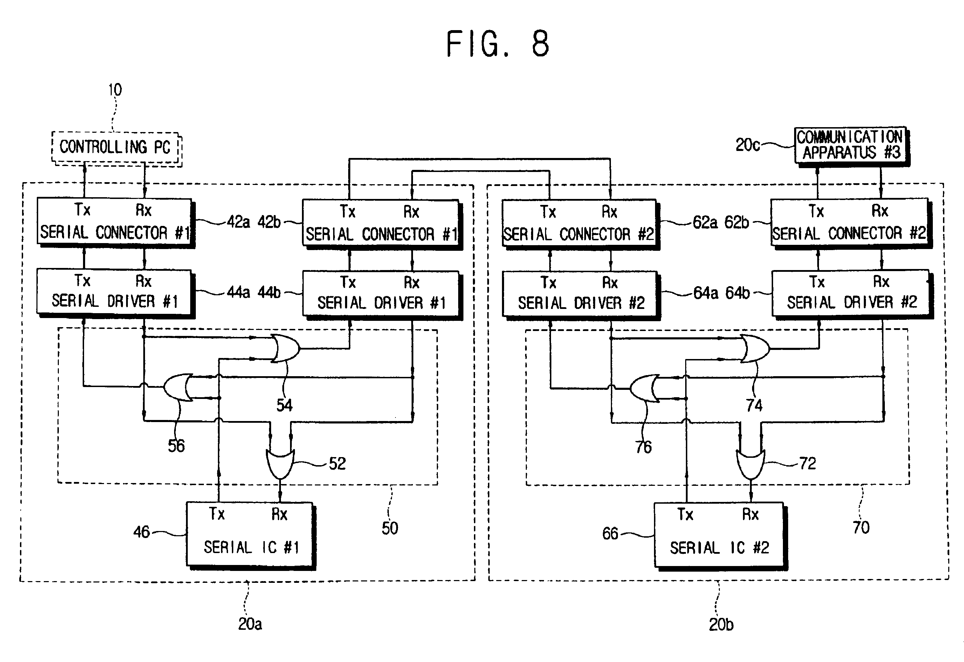

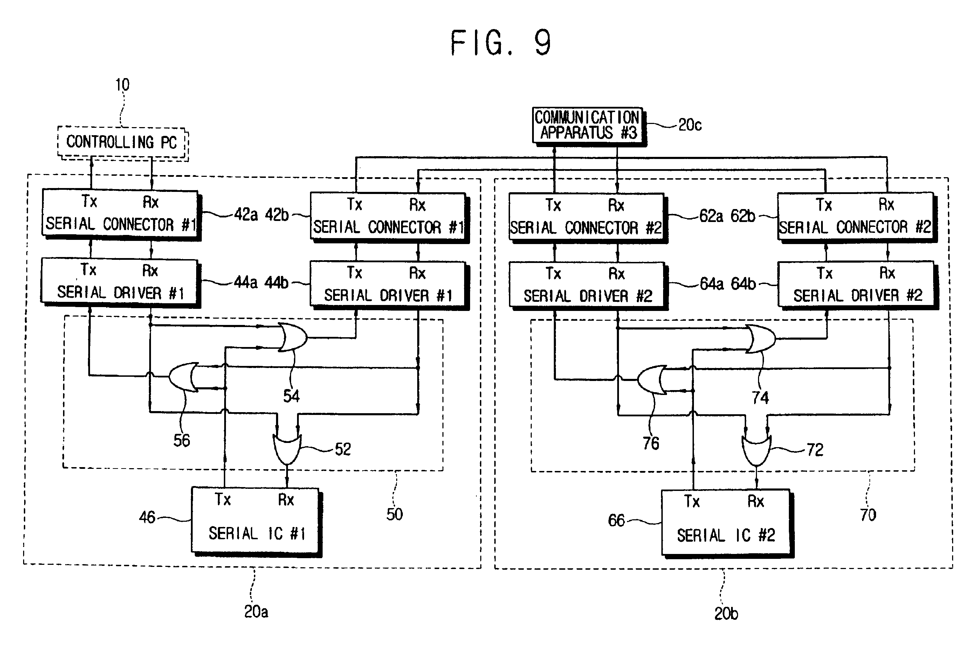

Figures 8 and 9 are block diagrams illustrating connection for data communication when the connecting order of the serial connectors according to an exemplary embodiment of the present invention is altered.

In the communication system of Figure 8, a first communication apparatus 20a comprises a first serial connector 42a connected with the controlling PC 10, and a second serial connector 42b connected with a first serial connector 62a of a second communication apparatus 20b. Further, a second serial connector 62b of the second communication apparatus 20b is connected with one of the serial connectors (not shown) provided in a third communication apparatus 20c. Likewise, the plurality of communication apparatuses 20a, 20b, 20c are connected to each other in series with the controlling PC 10.

When the first communication apparatus 20a receives control data from the controlling PC 10 through a receiving terminal Rx of one serial connector 42a, the control data is transmitted to the receiving terminal Rx of the serial driver 44a. Then, the serial driver 44a converts the received control data to be recognizable for the serial IC 46, and outputs the control data to the first and second OR gates 52 and 54. The first OR gate 52 transmits the received control data to the serial IC 46, and the second OR gate 52 transmits the received control data to the receiving terminal Rx of the serial connector 62a of the second communication apparatus 20b through respective transmitting terminals Tx of the serial driver 44b and the serial connector 42b.

In the second communication apparatus 20b, the control data received from the controlling PC 10 through the receiving terminal Rx of the serial connector 62a is transmitted to the serial IC 66 and the third communication apparatus 20c through the first OR gate 72 and the second OR gate 74, like data flow of the first communication apparatus 20a.

Further, the data transmitted from the serial IC 46 of the first communication apparatus 20a is transmitted to the second OR gate 54 and the third OR gate 56. The second OR gate 54 and the third OR gate 56 outputs the transmitting data of the serial IC 46 to the respective serial drivers 44a and 44b. Then, the respective serial drivers 44a and 44b converts the transmitting data to be transmittable to the outside and then transmits it to the controlling PC 10 and the second communication apparatus 20b through the respective serial connectors 42a and 42b.

Also, the data transmitted from the serial IC 66 of the second communication apparatus 20b is transmitted to the second OR gate 74 and the third OR gate 76. Then, the second OR gate 74 and the third OR gate 76 transmit the data to the first communication apparatus 20a and the third communication apparatus 20c through the respective serial connectors 62a and 62b.

Thus, the control data can be transmitted from the controlling PC 10 to each serial IC of the first, second and third communication apparatuses 20a, 20b and 20c. Further, the transmitting data can be transmitted from each serial IC of the first, second and third communication apparatuses 20a, 20b and 20c to the neighboring communication apparatus, the controlling PC 10, etc.

If the connecting order of the serial connectors of Figure 8 is altered as shown in Figure 9, data communication is possible through the following data flow.

When the first communication apparatus 20a receives the control data from the controlling PC 10 through a receiving terminal Rx of one serial connector 42a, the control data is transmitted to the receiving terminal Rx of the serial driver 44a. Then, the serial driver 44a converts the received control data to be recognizable for the serial IC 46, and outputs the control data to the first and second OR gates 52 and 54. The first OR gate 52 transmits the received control data to the serial IC 46, and the second OR gate 54 transmits the received control data to the receiving terminal Rx of the serial connector 62b of the second communication apparatus 20b through the respective transmitting terminals Tx of the serial driver 44b and the serial connector 42b.

In the second communication apparatus 20b, the control data received from the controlling PC 10 through the receiving terminal Rx of the serial connector 62b is transmitted to the serial IC 66 and the third communication apparatus 20c through the first OR gate 72 and the third OR gate 76.

Further, the data transmitted from the serial IC 46 of the first communication apparatus 20a is transmitted to the second OR gate 54 and the third OR gate 56. The second OR gate 54 and the third OR gate 56 outputs the transmitting data of the serial IC 46 to the respective serial drivers 44a and 44b. Then, the respective serial drivers 44a and 44b converts the transmitting data to be transmittable to the outside and then transmits it to the controlling PC 10 and the second communication apparatus 20b through the respective serial connectors 42a and 42b.

Also, the data transmitted from the serial IC 66 of the second communication apparatus 20b is transmitted to the second OR gate 74 and the third OR gate 76. Then, the second OR gate 74 and the third OR gate 76 transmit the data to the first communication apparatus 20a and the third communication apparatus 20c through the respective serial connectors 62a and 62b.

From the foregoing it will be understood that the OR gates 72, 74, 76 are configured so that that data received at the receive terminal of either of the first and second connectors 62a, 62b is not routed to the other thereof. Also, data transmitted from the transmit terminal of the communication device comprising serial IC 66, is not routed to the receive terminals of either of the first and second connectors 62a, 62b via the serial drivers 64a, 64b.

Thus, the data communication is possible even though the connecting order of the serial connector is altered. Hence, the PC is connectable to the output serial connector as well as the input serial connector, so that the monitoring PC together with the controlling PC can be connected in addition to the communication apparatus.

According to an exemplary embodiment of the present invention, there are provided a pair of communication connectors to be connected with a pair of external apparatuses; a communication controller to generate transmitting data to be transmitted to the external apparatus and receive receiving data from the external apparatus to perform a predetermined function; and a data path controller to control the transmitting data generated by the communication controller to be transmitted to the pair of external apparatuses through the pair of communication connectors, transmit the receiving data received through each communication connector to the communication controller, and transmit the data to the external apparatus through another communication connector, so that a communication system is simplified, communication time is saved, and data communication is possible regardless of the connecting order of the communication connectors.

As described above, an exemplary embodiment of the present invention provides a communication apparatus which can simplify a communication system, save communication time, and make data communication possible regardless of the connecting order of the communication connectors.

Although an exemplary embodiment of the present invention has been shown and described, it will be appreciated by those skilled in the art that changes may be made therein without departing from the the invention, the scope of which is evident from the appended claims.

## Claims

1. A communication apparatus (20) for being serially connected with external apparatus (20, 30, 40), comprising:
a connector arrangement comprising first and second connectors (22a, 22b) to be connected to respective external apparatus, the connectors each having a receive terminal (Rx) and a transmit terminal (Tx) for serial data,
a communication device (25) having a transmit terminal (Tx) to transmit serial data to be sent through the connector arrangement to said external apparatus, and receive terminal to receive serial data from the connector arrangement from the external apparatus, and
a data path controller (30) for controlling the passage of data between the connector arrangement and the communication device, **characterised in that**
the passages of data are so configured that:
(a) serial data received at the receive terminal of either of the first or the second connector is routed to the receive terminal of the communication device (25);
(b) serial data received at the receive terminal of the first connector (22a) or data transmitted from the transmit terminal of the communication device (25) is routed to be transmitted from the transmit terminal of the second connector (22b), and
(c) serial data received at the receive terminal of the second connector (22b) or data transmitted from the transmit terminal of the communication device (25) is routed to be transmitted from the transmit terminal of the first connector (22b).

2. A communication apparatus according to claim 1 wherein the gate arrangement is configured so that data received at the receive terminal of either of the first and second connectors (22a, 22b) is not routed to the other thereof.

3. A communication apparatus according to claim 1 or 2 wherein the gate arrangement is configured so that data transmitted from the transmit terminal of the communication device (25) is not routed to the receive terminals of either of the first and second connectors (22a, 22b).

4. A communication apparatus according to any preceding claim including:
a. a first logic device (32) configured to route data received at the receive terminal of either of the first or the second connector, to the receive terminal of the communication device (25);
b. a second logic device (34) configured to route serial data received at the receive terminal of the first connector (22a) or data transmitted from the transmit terminal of the communication device (25), to the transmit terminal of the second connector (22b); and
c. a third logic device (36) configured to route serial data received from the receive terminal of the second connector (22b) or data transmitted from the transmit terminal of the communication device (25), to the transmit terminal of the first connector (22b).

5. The communication apparatus according to claim 4, wherein the first logic device comprises an OR gate which performs an OR operation on the data inputted through the respective communication connectors and then transmits the OR-operated data to the communication controller.

6. The communication apparatus according to claim 4 or 5, wherein the second logic device comprises an OR gate which performs an OR operation on the data transmitted by the communication controller (26) with the data received through the receive terminal of the first of the connectors (22a).

7. The communication apparatus according to claim 4, 5 or 6 wherein the third logic device comprises an OR gate which performs an OR operation on the data transmitted by the communication controller (26) with the data received through the receive terminal of the second of the connectors (22b).

8. First and second communication apparatuses (20a, 20b) each as claimed in any preceding claim, with the transmit terminal of one of the connectors of the first apparatus being connected to the receive terminal of either of receive terminals of the connectors of the second apparatus.

## Patentansprüche

1. Kommunikationsvorrichtung (20), um in Reihe zu einer externen Vorrichtung (20, 30, 40) geschaltet zu werden, umfassend:
eine Anschlussstückanordnung mit einem ersten und einem zweiten Anschlussstück (22a, 22b), um mit einer jeweiligen externen Vorrichtung verbunden zu werden, wobei die Anschlussstücke jeweils einen Empfangsanschluss (Rx) und einen Sendeanschluss (Tx) für serielle Daten haben,
eine Kommunikationsvorrichtung (25) mit einem Sendeanschluss (Tx), um zu sendende serielle Daten über die Anschlussstückanordnung zu der externen Vorrichtung zu senden, und einem Empfangsanschluss, um serielle Daten von der Anschlussstückanordnung von der externen Vorrichtung zu empfangen, und
eine Datenpfadsteuerung (30) zum Steuern des Durchlaufs von Daten zwischen der Anschlussstückanordnung und der Kommunikationsvorrichtung, **dadurch gekennzeichnet, dass**
die Durchläufe von Daten so konfiguriert sind, dass:
(a) beim Empfangsanschluss von entweder dem ersten oder dem zweiten Anschlussstück empfangene serielle Daten zum Empfangsanschluss der Kommunikationsvorrichtung (25) geführt werden;
(b) beim Empfangsanschluss des ersten Anschlussstücks (22a) empfangene serielle Daten oder vom Sendeanschluss der Kommunikationsvorrichtung (25) gesendete Daten geführt werden, um vom Sendeanschluss des zweiten Anschlussstücks (22b) gesendet zu werden, und
(c) beim Empfangsanschluss des zweiten Anschlussstücks (22b) empfangene serielle Daten oder vom Sendeanschluss der Kommunikationsvorrichtung (25) gesendete Daten geführt werden, um vom Sendeanschluss des ersten Anschlussstücks (22b) gesendet zu werden.

2. Kommunikationsvorrichtung nach Anspruch 1, wobei die Gatteranordnung so konfiguriert ist, dass beim Empfangsanschluss von jedem des ersten und des zweiten Anschlussstücks (22a, 22b) empfangene Daten nicht zum anderen davon geführt werden.

3. Kommunikationsvorrichtung nach Anspruch 1 oder 2, wobei die Gatteranordnung so konfiguriert ist, dass vom Sendeanschluss der Kommunikationsvorrichtung (25) gesendete Daten nicht zu den Empfangsanschlüssen von jedem des ersten und des zweiten Anschlussstücks (22a, 22b) geführt werden.

4. Kommunikationsvorrichtung nach einem der vorangehenden Ansprüche, die Folgendes enthält:
a. eine erste Logikvorrichtung (32), die konfiguriert ist, um beim Empfangsanschluss von jedem des ersten oder des zweiten Anschlussstücks empfangene Daten zum Empfangsanschluss der Kommunikationsvorrichtung (25) zu führen;
b. eine zweite Logikvorrichtung (34), die konfiguriert ist, um beim Empfangsanschluss des ersten Anschlussstücks (22a) empfangene serielle Daten oder vom Senderanschluss der Kommunikationsvorrichtung (25) gesendete Daten zum Sendeanschluss des zweiten Anschlussstücks (22b) zu führen; und
c. eine dritte Logikvorrichtung (36), die konfiguriert ist, um vom Empfangsanschluss des zweiten Anschlussstücks (22b) empfangene serielle Daten oder vom Senderanschluss der Kommunikationsvorrichtung (25) gesendete Daten zum Sendeanschluss des ersten Anschlussstücks (22b) zu führen.

5. Kommunikationsvorrichtung nach Anspruch 4, wobei die erste Logikvorrichtung ein ODER-Gatter aufweist, das eine ODER-Operation an den Daten durchführt, die durch die jeweiligen Kommunikationsanschlussstücke eingegeben werden, und dann die einer ODER-Operation unterzogenen Daten zu der Kommunikationssteuerung sendet.

6. Kommunikationsvorrichtung nach Anspruch 4 oder 5, wobei die zweite Logikvorrichtung ein ODER-Gatter aufweist, das eine ODER-Operation an den durch die Kommunikationssteuerung (26) gesendeten Daten mit den durch den Empfangsanschluss des ersten der Anschlussstücke (22a) empfangenen Daten durchführt.

7. Kommunikationsvorrichtung nach Anspruch 4, 5 oder 6, wobei die dritte Logikvorrichtung ein ODER-Gatter aufweist, das eine ODER-Operation an den durch die Kommunikationssteuerung (26) gesendeten Daten mit den durch den Empfangsanschluss des zweiten der Anschlussstücke (22b) empfangenen Daten durchführt.

8. Erste und zweite Kommunikationsvorrichtung (20a, 20b), jeweils nach einem der vorangehenden Ansprüche, wobei der Senderanschluss von einem der Anschlussstücke der ersten Vorrichtung mit dem Empfangsanschluss von einem von Empfangsanschlüssen der Anschlussstücke der zweiten Vorrichtung verbunden ist.

## Revendications

1. Appareil (20) de communication destiné à être connecté en série avec un appareil extérieur (20, 30, 40), comportant :
un agencement de connecteurs comportant des premier et second connecteurs (22a, 22b) destinés à être connectés à des appareils extérieurs respectifs, les connecteurs ayant chacun une borne de réception (Rx) et une borne d'émission (Tx) pour des données en série,
un dispositif de communication (25) ayant une borne d'émission (Tx) pour l'émission de données en série devant être envoyées par l'intermédiaire de l'agencement de connecteurs auxdits appareils extérieurs, et une borne de récepteur destinée à recevoir des données en série provenant de l'agencement de récepteurs depuis les appareils extérieurs, et
une unité (30) de commande de chemin de données destinée à commander le passage de données entre l'agencement de connecteurs et le dispositif de communication, **caractérisé en ce que**
les passages de données sont configurés de manière que :
(a) des données en série reçues à la borne de réception du premier ou du second connecteur soient acheminées vers la borne de réception du dispositif de communication (25) ;
(b) des données en série reçues à la borne de réception du premier connecteur (22a) ou des données émises depuis la borne d'émission du dispositif de communication (25) soient acheminées pour être émises depuis la borne d'émission du second connecteur (22b), et
(c) des données en série reçues à la borne de réception du second connecteur (22b) ou des données émises depuis la borne d'émission du dispositif de communication (25) soient acheminées pour être émises depuis la borne d'émission du premier connecteur (22b).

2. Appareil de communication selon la revendication 1, dans lequel l'agencement de portes est configuré de façon que des données reçues à la borne de réception de l'un des premier et second connecteurs (22a, 22b) ne soient pas acheminées vers l'autre de ceux-ci.

3. Appareil de communication selon la revendication 1 ou 2, dans lequel l'agencement de portes est configuré de façon que des données émises depuis la borne d'émission du dispositif de communication (25) ne soient pas acheminées vers les bornes de réception de l'un des premier et second connecteurs (22a, 22b).

4. Appareil de communication selon l'une quelconque des revendications précédentes, comprenant :
a. un premier dispositif logique (32) configuré pour acheminer des données reçues à la borne de réception de l'un du premier ou du second connecteur, vers la borne de réception du dispositif de communication (25) ;
b. un deuxième dispositif logique (34) configuré pour acheminer des données en série reçues à la borne de réception du premier connecteur (22a) ou des données émises depuis la borne d'émission du dispositif de communication (25) vers la borne d'émission du second connecteur (22b) ; et
c. un troisième dispositif logique (36) configuré pour acheminer des données en série reçues de la borne de réception du second connecteur (22b) ou des données émises depuis la borne d'émission du dispositif de communication (25), vers la borne d'émission du premier connecteur (22b).

5. Appareil de communication selon la revendication 4, dans lequel le premier dispositif logique comporte une porte OU qui exécute une opération OU sur les données arrivant en entrée par l'intermédiaire des connecteurs de communication respectifs, puis transmet les données soumises à l'opération OU à l'unité de commande de communication.

6. Appareil de communication selon la revendication 4 ou 5, dans lequel le deuxième dispositif logique comporte une porte OU qui exécute une opération OU sur les données émises par l'unité (26) de commande de communication avec les données reçues par l'intermédiaire de la borne de réception du premier des connecteurs (22a).

7. Appareil de communication selon la revendication 4, 5 ou 6, dans lequel le troisième dispositif logique comporte une porte OU qui exécute une opération OU sur les données émises par l'unité de commande (26) de communication avec les données reçues par l'intermédiaire de la borne de réception du second des connecteurs (22b).

8. Premier et second appareils de communication (20a, 20b), chacun selon l'une quelconque des revendications précédentes, la borne d'émission de l'un des connecteurs du premier appareil étant connectée à la borne de réception de l'une des bornes de réception des connecteurs du second appareil.
